## Europäisches Patentamt

## European Patent Office

## Office européen des brevets

(11) Veröffentlichungsnummer: **0 223 955**
**B1**

(12) **EUROPÄISCHE PATENTSCHRIFT**

(45) Veröffentlichungstag der Patentschrift:
14.02.90

(51) Int. Cl.⁴: **G01P 15/08**

(21) Anmeldenummer: 86112970.8

(22) Anmeldetag: 19.09.86

(54) Beschleunigungsaufnehmer.

(30) Priorität: 31.10.85 DE 3538766

(43) Veröffentlichungstag der Anmeldung:
03.06.87 Patentblatt 87/23

(45) Bekanntmachung des Hinweises auf die Patenterteilung:
14.02.90 Patentblatt 90/7

(84) Benannte Vertragsstaaten:
DE FR GB IT

(56) Entgegenhaltungen:
DE-A- 2 920 147
FR-A- 492 818
JP-A-60 216 267
US-A- 3 528 297
US-A- 3 629 773

(73) Patentinhaber: ROBERT BOSCH GMBH, Postfach 50,
D-7000 Stuttgart 1(DE)

(72) Erfinder: Dobler, Klaus, Dr.-Ing., Bettäckerstrasse 12,
D-7016 Gerlingen(DE)
Erfinder: Hachtel, Hansjörg, Dipl.-Ing. (FH),
Buchenstrasse 4, D-7251 Weissach(DE)

**Beschreibung**

Die Erfindung geht aus von einem Beschleunigungsaufnehmer nach der Gattung des Hauptanspruchs. Derartige Beschleunigungsaufnehmer sind geeignet, Linear- und Drehbeschleunigungen zu erfassen und aufgrund ihres verhältnismäßig einfachen mechanischen Aufbaus besonders für Serienanwendungen, beispielsweise für Auslösesysteme beim air bag oder Gurtstrammer im Kraftfahrzeug geeignet. Bei einem bekannten Beschleunigungsaufnehmer sind die Elektroden an starren Stegen angeordnet, was insbesondere bei der Ermittlung von Drehbeschleunigungen nachteilig sein dürfte, da diese noch nicht genau genug erfaßt werden (JP-A 60 216 267).

Vorteile der Erfindung

Der erfindungsgemäße Beschleunigungsaufnehmer mit den kennzeichnenden Merkmalen des Hauptanspruchs hat demgegenüber den Vorteil, daß nicht nur Linearbeschleunigungen besonders genau ermittelt werden, sondern vor allem auch Drehbeschleunigungen. Dieses Prinzip läßt sich grundsätzlich mit jedem Beschleunigungs-Meßverfahren realisieren, gleichgültig ob beispielsweise induktiv, optisch, über Piezoeffekte, kapazitiv oder elektromechanisch. Weitere vorteilhafte Ausgestaltungen der Erfindung ergeben sich auch noch aus den abhängigen Ansprüchen.

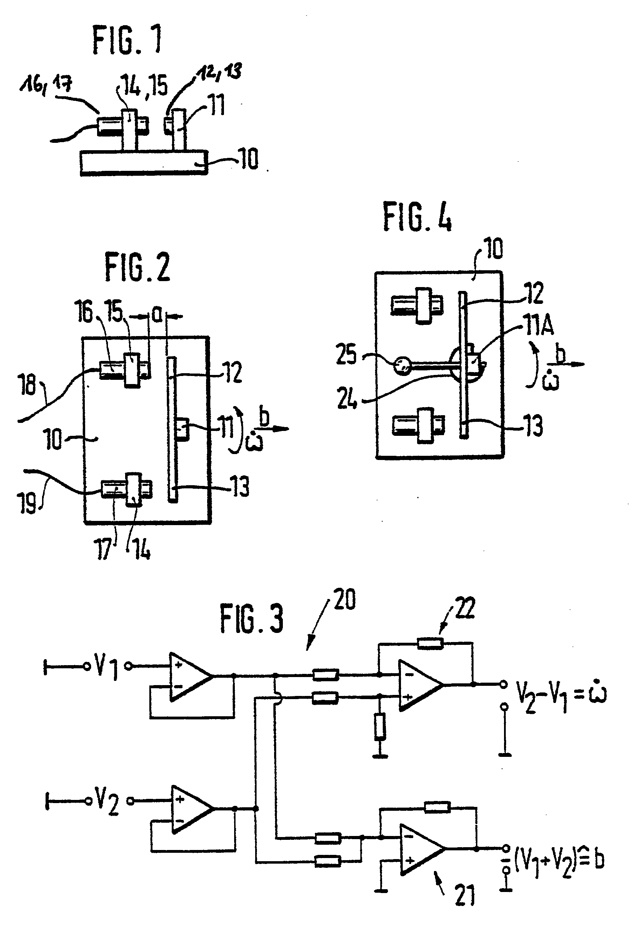

Ausführungsbeispiele der Erfindung sind in der Zeichnung dargestellt und werden in der nachfolgenden Beschreibung näher erläutert. Es zeigen die Figuren 1 und 2 ein erstes Ausführungsbeispiel, davon Figur 1 eine Seitenansicht, Figur 2 eine Draufsicht; Figur 3 eine Auswerteelektronik, Figur 4 ein zweites Ausführungsbeispiel in Draufsicht.

Beschreibung der Ausführungsbeispiele

In Figuren 1 und 2 ist mit 10 eine Grundplatte bezeichnet, auf der eine Haltevorrichtung 11 angeordnet ist, an welcher zwei waagrecht verlaufende Biegebalken 12, 13 befestigt sind. Die Biegebalken können selbstverständlich aus einem Teil bestehen, insbesondere aus einer metallischen Blattfeder. Im Abstand a zu den beiden Enden der Biegebalken 12, 13 sind auf der Grundplatte, ebenfalls an Haltevorrichtungen 14, 15, Abstandssensoren 16, 17 befestigt.

Die Abstandssensoren 16, 17 können grundsätzlich nach jedem Abstands-Meßverfahren arbeiten, gleichgültig, ob induktiv, optisch, über Piezoeffekte, kapazitiv oder elektromechanisch. Von den Abstandssensoren 16, 17 führen - insbesondere wenn es sich um elektrische handelt - Anschlußkabel 18, 19 zu einer Auswerteelektronik 20, die beispielsweise so wie in Figur 3 dargestellt, ausgebildet sein soll. Die Auswerteelektronik kann an einer beliebigen Stelle befestigt sein, z. B. auf der Grundplatte 10 oder weit von ihr entfernt.

Bei einer linearen Beschleunigung b - siehe Pfeil in Figur 2 - vergrößert sich aufgrund der Trägheitskräfte der Abstand a zwischen den Abstandssensoren und den Enden der Biegebalken, so daß die Summe der Ausgangssignale der Abstandssensoren proportional zur Beschleunigung b ist. Die Differenz der beiden Signale ist bei symmetrischem Aufbau Null. Wird der Beschleunigungsaufnehmer einer Drehbeschleunigung $\omega$ ausgesetzt - siehe gebogenen Pfeil in Figur 2 - dann verringert bzw. vergrößert sich der Abstand a zwischen den Abstandssensoren und den Biegebalken, so daß die Differenz dieser beiden Sensorsignale proportional zur Drehbeschleunigung $\omega$ ist. Die Summe der beiden Signale ist bei symmetrischem Aufbau Null, d. h. Linearbeschleunigung und Drehbeschleunigung können getrennt voneinander erfaßt werden, auch bei überlagerten Dreh- und Linearbeschleunigungen.

Der Auswerteelektronik - siehe Figur 3 - werden die Ausgangssignale $V_1$ und $V_2$ der Abstandssensoren zugeführt. In einem Summierverstärker 21 wird das Signal der Linearbeschleunigung gebildet, in einem Differenzverstärker 22 das Signal der Drehbeschleunigung.

Das Ausführungsbeispiel nach den Figuren 1 und 2 ist konstruktiv besonders einfach und dann gut geeignet, wenn die zu messenden Linear- und Drehbeschleunigungen zu ähnlich großen Auslenkungen der Biegebalken 12, 13 führen. Ist aber beispielsweise die Linearbeschleunigung sehr hoch, dagegen die Drehbeschleunigung klein, wie es beispielsweise beim Kraftfahrzeug beim Frontalzusammenstoß im Vergleich zu einem Überschlag der Fall ist, dann müssen die Biegebalken entsprechend der Linearbeschleunigung relativ steif ausgelegt werden, wodurch bei kleinen Drehbeschleunigungen nur sehr wenig Nutzsignal zur Verfügung steht. Beim Ausführungsbeispiel nach Figur 4 ist es dagegen möglich, konstruktiv zu erreichen, daß selbst bei sehr unterschiedlichen Beschleunigungswerten optimale Signale erzielt werden.

Gleiche Teile wie zuvor sind mit den gleichen Ziffern bezeichnet. Im Gegensatz zu obigem Ausführungsbeispiel ist hier die Haltevorrichtung 11A mit den daran angeordneten Biegebalken drehbar mit der Grundplatte 10 verbunden. Dies geschieht über ein geeignetes Federelement, beispielsweise eine Spiralfeder 24 oder eine geeignete Blatt- oder Zugfeder. Die Abstandssensoren sind wieder, wie im Ausführungsbeispiel nach Figur 1 und 2, an der Grundplatte befestigt. Über die Steifigkeit der Spiralfeder 24 und über eine oder mehrere zusätzliche Massen 25, die an der Haltevorrichtung 11A befestigt sind, kann die Größe der Verdrehung der gesamten Biegebalkenanordnung auf die tatsächlich zu messenden Drehbeschleunigungen angepaßt und optimiert werden. Bei einer Linearbeschleunigung b hängt die Auslegung der Biegebalken allein von deren Steifigkeit, Massenverteilung und Länge ab. Bei einer kleinen Drehbeschleunigung wird ein gut auswertbares Nutzsignal auch bei keiner oder sehr geringer Durchbiegung der Biegebalken dadurch erreicht, daß sich das Gesamtsystem Biegebalken durch die zusätzliche Masse 25 gegenüber der Grundplatte 10 verdreht.

Es ist auch möglich, für die Biegebalken 12, 13 Anschläge vorzusehen, die dann notwendig sind, wenn mit der Sensoranordnung stoßartige Beschleunigungen bzw. Verzögerungen in einer vorhersehbaren Richtung gemessen werden müssen.

## Patentansprüche

1. Beschleunigungsaufnehmer, insbesondere zur Anwendung im Kraftfahrzeug im air bag - oder Geburtstrammersystem, mit einem Sensorelement in Form eines Biegeschwingers, der von einem Befestigungspunkt (11) ausgehend zwei gleich lange Biegebalken (12, 13) hat und zwei mit diesen zusammenwirkende, insbesondere elektrisch arbeitende, berührungsfreie Abstandssensoren, mit oder ohne zusätzliche Massenankopplung und Umsetzung der mechanischen Verformung in ein insbesondere elektrisches Signal über Abstandsmeßverfahren mittels Hall-Sensor, Wirbelstromgeber, induktiver, kapazitiver oder optischer Abtastmittel oder mittels Dehnmeßstreifen und dergleichen wobei das Sensorelement zwei derart angeordnete Sensoren (12, 13; 16, 17) aufweist, daß die Summe ihrer Ausgangssignale der doppelten Linearbeschleunigung entspricht und ihre Differenz ein Maß für die Drehbeschleunigung ist, dadurch gekennzeichnet, daß der Biegeschwinger (12, 13) drehbar über ein Federelement gegenüber einer Grundplatte (10) gelagert ist, z.B. dadurch, daß die diesen tragende Haltevorrichtung durch eine Spiral- oder Drehfeder (24) mit der Grundplatte verbunden ist, und daß die Abstandssensoren auf der Grundplatte befestigt sind.

2. Aufnehmer nach Anspruch 1, dadurch gekennzeichnet, daß von den Abstandssensoren (16, 17) Kabel zu einer Auswerteelektronik (20) führen dadurch gekennzeichnet, daß die Auswerteelektronik aus einem Summierverstärker (21) und einem Differenzverstärker (22) besteht, wobei im Summierverstärker das Signal der Linearbeschleunigung, im Differenzverstärker das Signal der Drehbeschleunigung gebildet wird.

3. Aufnehmer nach einem der Ansprüche 1 und 2, dadurch gekennzeichnet, daß am Biegeschwinger bzw. an dessen Haltevorrichtung eine zusätzliche Masse (25) angeordnet ist.

4. Aufnehmer nach einem der Ansprüche 1 bis 3, dadurch gekennzeichnet, daß zur Begrenzung der Ausschläge für die Biegebalken Anschläge vorgesehen sind.

## Claims

1. Acceleration sensor, especially for use in a motor vehicle in the airbag or belt-tightener system, with a sensor element in the form of a flexural resonator which, starting from a fastening point (11), has two equally long bending bars (12, 13) and two especially electrically operating contactless distance sensors interacting with these, with or without an additional mass coupling and conversion of the mechanical deformation into an especially electrical signal via distance-measuring processes by means of Hall sensors, eddycurrent transmitters, inductive, capacitive or optical sensing means or strain gauges and the like, the sensor element possessing two sensors (12, 13; 16, 17) so arranged that the sum of their output signals corresponds to double the linear acceleration and their difference is a measure of the rotational acceleration, characterized in that the flexural resonator (12, 13) is mounted rotatably relative to a baseplate (10) via a spring element, for example by connecting the holding device carrying the flexural resonator to the baseplate by means of a helical or torsional spring (24), and in that the distance sensors are fastened to the baseplate.

2. Sensor according to Claim 1, characterized in that cables lead from the distance sensors (16, 17) to evaluation electronics (20), and the evaluation electronics consist of a summing amplifier (21) and of a differential amplifier (22), the signal representing the linear acceleration being formed in the summing amplifier and the signal representing the rotational acceleration being formed in the differential amplifier.

3. Sensor according to one of Claims 1 and 2, characterized in that an additional weight (25) is arranged on the flexural resonator or on its holding device.

4. Sensor according to one of Claims 1 to 3, characterized in that stops are provided for limiting the deflections of the bending bars.

## Revendications

1. Capteur d'accélération, en particulier pour usage dans un véhicule automobile, dans le système sac d'air ou rétracteur de ceinture, avec un élément de capteur, sous la forme d'un oscillateur de flexion, qui a, à partir d'un point de fixation (11), deux barres de flexion de même longueur (12, 13) et deux capteurs de distance agissant en coopération avec celles-ci, travaillant surtout électriquement et sans contact, avec ou sans accouplement avec une masse additionnelle et conversion de la déformation mécanique en un signal notamment électrique par un procédé de mesure de distance à partir de capteur de Hall, émetteur de courant de Foucault, organe d'exploration inductif, capacitif ou optique ou bien au moyen de bandes de mesure d'extension ou autres procédés semblables, dans lesquels l'élément capteur comporte deux capteurs (12, 13; 16, 17) placés de sorte que la somme de leurs signaux de sortie corresponde au double de l'accélération linéaire et leur différence est une grandeur pour l'accélération de rotation, caractérisé en ce que l'oscillateur de flexion (12, 13) est installé sur un élément de ressort et peut pivoter par rapport à une plaque de base (10), par exemple en ce que le dispositif porteur supportant cet oscillateur est relié à la plaque de base par un ressort spiral ou à branches, et que les capteurs de distance sont fixés sur la plaque de base.

2. Capteur selon la revendication 1, caractérisé en ce que, à partir des capteurs de distance (16, 17), des câbles mènent à une électronique d'évaluation (20), l'électronique d'évaluation se composant d'un amplificateur de somme (21) et d'un amplificateur de différence (22), le signal de l'accélération linéaire étant formé dans l'amplificateur de somme et le signal de l'accélération de rotation étant formé dans l'amplificateur de différence.

3. Capteur selon l'une des revendications 1 et 2, caractérisé en ce que, à l'oscillateur de flexion ou à son dispositif porteur, est appliquée une masse additionnelle.

4. Capteur selon l'une quelconque des revendications 1 à 3, caractérisé en ce que pour limiter les déviations des barres de flexion, des butées sont prévues.

EP 0 223 955 B1

FIG. 1

FIG. 4

FIG. 2

FIG. 3